# EUROPEAN PATENT SPECIFICATION

(11) **EP 3 164 316 B1**
(45) Date of publication and mention of the grant of the patent: **09.05.2018**
(21) Application number: 15736594.1
(22) Date of filing: 22.06.2015
(51) Int. Cl.: B62D 7/18, F16C 23/04, F16C 11/02

(54) **STEERING IDLER AXLE FOR MEDIUM-BIG SELF-PROPELLED OPERATING MACHINES**
LENKZWISCHENACHSE FÜR MITTELGROSSE SELBSTANGETRIEBENE ARBEITSMASCHINEN
ESSIEU INTERMÉDIAIRE DE DIRECTION POUR MACHINES DE MAN OEUVRE AUTOMOTRICES DE TAILLE MOYENNE ET DE GRANDE TAILLE

(30) Priority: 01.07.2014 IT MO20140188
(43) Date of publication of application: 10.05.2017
(73) Proprietor: OMCI S.p.A., 41013 Castelfranco Emilia (MO) (IT)
(72) Inventor: MAGNI, Giorgio, I-41121 Modena (IT)
(74) Representative: Gianelli, Luca
(86) International application number: PCT/IB2015/001012
(87) International publication number: WO 2016/001729

(56) References cited:
- FR-A- 758 122
- US-A1- 2004 130 114

## Description

### DESCRIPTION OF THE INVENTION

The invention relates to a steering idler axle for medium-big self-propelled operating machines, such as big forklift trucks and the like. In particular, but not exclusively, the invention can be usefully applied to non-powered steering axles having a large total width, and in particular, such as to configure an outline whose dimension, transversal to the movement direction, is bigger than the one allowed for free passage on public roads.

An example of such types of vehicles is constituted by vehicles used for loading and unloading harbour facilities for lifting and transporting big loads such as containers and the like.

In order to be transported on the road up to the final use destination, the vehicles characterized by such dimensional features must be first disassembled in many transportable parts and then reassembled on the operation site, that is in the place where the vehicle is to be used.

In the specific case of the above mentioned vehicles, characterized by steering axles of large width, especially more than 3 meters, according to the known technique, it is necessary to disassemble the vehicle in more parts that can be transported singularly on the road. The vehicle axles must always be disassembled, together with other parts, such as hoisting arms, etc.

The subsequent re-assembling must be as simple and rapid as possible, taking into consideration that in most cases it must be carried out directly on the place where the machine is to be used.

Systems are known which allow to vary the width of large self-propelled vehicles. These are mainly devices that use mostly telescopic structures, operated in hydraulic, mechanical or even manual way, by means of which the width, that is determined by the axle, is changed.

However, these systems cause a certain constructive complication of the axle, which in some cases can even reduce the performance. These systems are also relatively expensive and they can be used in a limited field of applications, such as the frequent need to transport on the road.

There are also known solutions which use the articulation of the axle steering wheels to reduce its axial dimension adapting the articulation, after having disassembled the wheel from its hub and having disconnected the latter from the means that drive it into rotation, so as to allow the whole hub without wheels, to rotate widely about the pin or king pin, to position the same hub in a housing, provided specially for receiving it. In this way, the final length of the axle, which is normally called width, because it defines the width of the machine, is basically formed only by the fixed part of the same axle.

FR 758122, on which the preamble of claim 1 is based, discloses a steering idler axle for medium-big self-propelled operating machines, such as big forklift trucks and the like, which have a large total width, and in particular, such as to configure an outline whose dimension, transversal to the movement direction, bigger than the one allowed for free passage on public roads, which includes for each steering wheel, a wheel holding axis or hub, which is pivoted, by means of a king pin, to a fork structure that is situated at each of the ends of the axle.

The main drawback of such known solutions derives from the fact that they cause a substantial weakening of the bearing structural part of the axle, in the position where said housing must be made to receive the hub in the folded position.

This is not a small problem since, considering the entity of loads (some tens of tons), the structure can be strongly stressed so as to require, in some cases, suitable reinforcement measures for the weakened part.

The main object of the present invention is to overcome the limits of the prior art minimizing the operations and related times necessary to disassemble and re-assemble the self-moving operating machine, but allowing in any case its easy transport on the road.

An advantage of the invention derives from the simplicity, with which the few portions composing the device can be disassembled and re-assembled on site. Said objects and advantages are obtained by the invention as it has been illustrated by the present description, together with the enclosed Figures and claimed in the claims.

Further characteristics of the invention will become more evident from the following description of its preferred, but not only, embodiment illustrated by way of not limiting example in the enclosed Figures, in which:

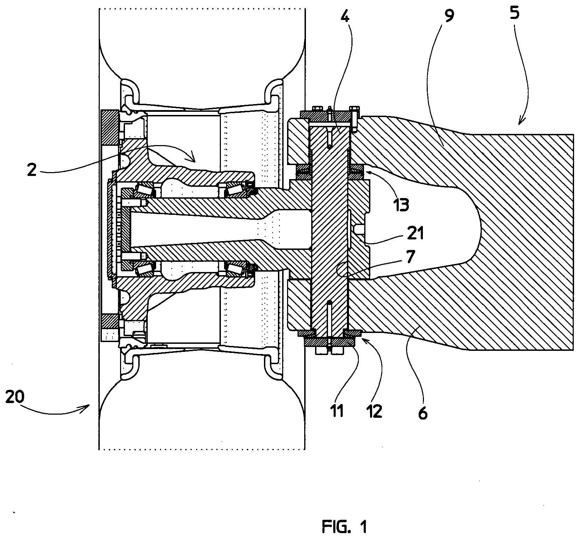

- Figure 1 is a schematic front view of the invention, partially in section taken along an axial plane;

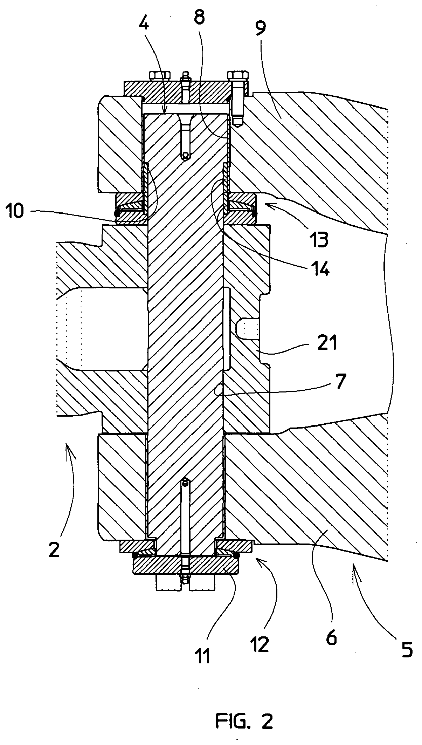

- Figure 2 shows a detail of Figure 1 in enlarged scale;
- Figure 3 is a schematic plan view from above of Figure 1;
- Figure 4 shows the same plan view illustrated in Figure 3 in a different working configuration.

With reference to the above mentioned Figures, reference numeral 1 indicates a steering idler axle for medium-big self-propelled operating machines, such as large forklift trucks, stacker machines for containers and the like.

The present axle has an estende total length (over 3 m), which configures therefore a large transversal outline, in particular larger than the one allowed for free passage on public roads. The axle comprises, for each steering wheel 20, a wheel holding axis or hub 2, which is pivoted to a fork structure 5 by means of a pin or spindle 4, held vertical or almost vertical in working position. The fork structure is situated at one of the ends of the axle support beam 1. The wheel holding axis or hub 2 of each steering wheel 20 is driven preferably by means of a hydraulic actuator or a steering cylinder, of which the free end of the stem 24 is shown. The latter is provided with a hole 25, by means of which the end of the stem 24 can be coupled, by using known coupling means, to a hole 26 provided in a control lever 27, which is integral with the wheel holding axis or hub 2.

The pin or spindle 4, which is also commonly known as king pin, is fastened to the lower branch or prong 6 of the fork structure 5, by means of a coupling which enables its relative free rotation, but not axial translation thereof, at least upwards.

The king pin 4 is rotatably coupled, in its median position, to a coupling seat 7, provided in the wheel holding axis or hub 2, and is always rotatably coupled without constraints in axial direction with a coaxial housing seat 8 that is made at the upper prong 9 of said fork structure 5.

The king pin 4 is also provided with a stepped area 10 protruding outwardly and composed of a shoulder made therein; the shoulder is aimed at interacting with a portion of the upper surface of the body 21 of the wheel holding axis or hub 2, which houses the coupling seat 7 provided in the wheel holding axis or hub 2. First thrust means are provided to work between a portion of the upper surface of the body of the body portion of the wheel holding axis or hub 2, which is situated outwardly near the coupling seat 7, and a corresponding portion of the lower surface of the upper branch or prong 9.

Second thrust means are provided to work coaxially between the lower end of the king pin 4 and the lower branch or prong 6.

In particular, the coupling, by means of which the pin or spindle 4 is fastened to the lower branch or prong 6 of the fork structure 2, enables relative free rotation thereof, but not axial translation, at least upwards and includes a thrust plate 11, which is fastened to the lower end of the same king pin 4.

The second thrust means, working coaxially between the lower end of said pin or spindle 4 and said lower branch or prong 6, consist of at least one oscillating lower bearing 12 provided to work between the lower branch or prong 6 and the thrust plate 11.

The thrust plate 11 is constituted substantially by a disc, which is fastened to the lower end of the king pin 4 at a distance that can be adjusted by the stepped area (or shoulder) 10 protruding outwardly.

The first thrust means, which work between a portion of the upper surface of the body 21 of the wheel holding axis or hub 2 (situated externally near the coupling seat 7 provided in the same wheel holding axis or hub 2) and a corresponding portion of the lower surface of the upper branch or prong 9, are composed of at least one upper bearing 13, of the oscillating type, which is disposed to work between said upper branch or prong 9 and an outer portion of the surface having the form of a circular crown and turned upwards of the portion of the body 21 of the wheel holding axis or hub 2.

The stepped area or shoulder 10 protruding outwardly is proportioned and dimensioned so as to interact with a substantial inner portion of the surface having the form of a circular crown and turned upwards of the body 21 of the wheel holding axis or hub 2.

In the shown embodiment, the stepped area 10 interacts with such inner portion of the surface having the form of a circular crown and turned upwards of said wheel holding axis or hub 2 by means of a spacer 14. One or more of said spacers arranged coaxial can be provided.

The assembling is carried out in the way described below.

The bearings 12 and 13 are adjusted axially, in a direction parallel to the axis of the seat 7, in which the king pin 4 is coupled, in such a way as to distribute the load on both prongs 6 and 9.

In this way, the reaction transmitted from the ground to the wheel resting on the ground can be distributed between the two prongs, upper 9 and lower 6.

In fact, the thrust applied by the body 21 of the wheel holding axis or hub 2 transmits a part of the load to the upper prong 9 by means of the bearing 13.

And the other part of the thrust applied by the body 21 of the wheel holding axis or hub 2 is transmitted to the stepped area or shoulder 10 of the pin or spindle 4 by means of the spacer 14, and by the thrust plate 11 to the lower bearing 12 and, by means of the latter, it is transmitted to the lower prong 6.

Adapting the above indicated adjustments to the deformations of the prongs, a good distribution of the bearing load of the wheel on both prongs 6 and 9 of the fork structure 5 can be obtained.

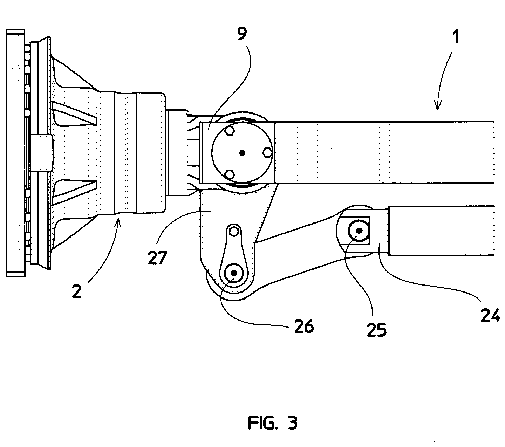

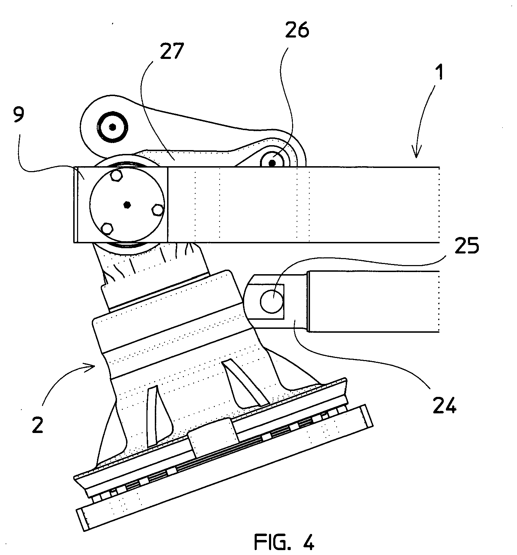

After having disconnected the actuating member, consisting of the actuating cylinder of the steering wheel, and after having disassembled the wheel 20 from the wheel holding axis or hub 2, the presence of the fork structure allows the latter to be freely folded from the position of Figure 3 to the position of Figure 4. In this way, due to the width of the fork structure 5, the total width of the steering axis can be limited by folding just to the length of the support beam that forms its framework.

## Claims

1. A steering idler axle for medium-big self-propelled operating machines, such as large forklift trucks, stacker machines for containers and the like, having a large total width which configures a large transversal outline, of the type comprising, for each steering wheel, a wheel holding axis or hub (2); which is pivoted, by means of a vertical or almost vertical king pin (4); to a fork structure (5) that is situated at each of the ends of the axle support beam, said king pin (4) being rotatably coupled, in its median position, to a coupling seat (7) provided in said wheel holding axis or hub (2);
first oscillating thrust means being provided, which work between a portion of the upper surface of the body of said wheel holding axis or hub (2), situated externally near the coupling seat (7), provided in said wheel holding axis or hub (2), and a corresponding portion of the lower surface of said upper branch or prong (9); wherein said king pin (4) is fastened to the lower branch or prong (6) of said fork structure (5), by means of a coupling which enables its relative free rotation, but not axial translation, at least upwards;
**characterized in that** said king pin (4):
is rotatably coupled, without constraints in axial direction, with a coaxial housing seat (8) made in the upper prong (9) of said fork structure (5) and is also provided with a stepped area (10), which is protruding outwardly and is aimed at interacting with a portion of the upper surface of the body of said wheel holding axis or hub (2) housing the coupling seat (7);
with second oscillating thrust means being also provided, working coaxially between the lower end of said king pin (4) and said lower branch or prong (6).

2. A steering idler axle according to claim 1, **characterized in that** said coupling, by means of which said king pin (4) is fastened to the lower branch or prong (6) of the fork structure (2) and which enables relative free rotation, but not axial translation, at least upwards, includes a thrust plate (11) fastened to the lower end of the same king pin (4).

3. A steering idler axle according to claim 2, **characterized in that** said second oscillating thrust means, which work coaxially between the lower end of said pin or spindle (4) and said lower branch or prong (6), consist of at least one oscillating lower bearing (12) provided to work between said lower branch or prong (6) and a surface having the form of a circular crown turned upwards of said thrust plate (11).

4. A steering idler axle according to claim 2, **characterized in that** said thrust plate (11) is fastened to the lower end of said pin or spindle (4) at a distance which can be adjusted by said stepped area (10) protruding outwardly.

5. A steering idler axle according to claim 1 or 2, **characterized in that** the first oscillating thrust means work between a portion of the upper surface of the body of said wheel holding axis or hub (2), situated externally in proximity to the coupling seat (7), provided in said wheel holding axis or hub (2), and a corresponding portion of the lower surface of said upper branch or prong (9); with the first oscillating thrust means consisting of at least one upper bearing (13), aimed at working between said upper branch or prong (9) and an outer portion of the surface having the form of a circular crown turned upwards of the body of said wheel holding axis or hub (2); with said outwardly protruding stepped area (10) interacting with an inner portion of the surface having the form of a circular crown and turned upwards of said wheel holding axis or hub (2).

6. A steering idler axle according to claim 2 or 5, **characterized in that** said outwardly protruding stepped area (10) interacts with an inner portion of the surface having the form of a circular crown and turned upwards of said wheel holding axis or hub (2), by means of at least a spacer (14).

## Patentansprüche

1. Lenkzwischenachse für mittelgrosse selbstangetriebene Arbeitsmaschinen, wie große Gabelstapler, Staplermaschinen für Container und dergleichen, die eine große Gesamtbreite haben, die einen großen transversalen Umriss bildet, die für jedes Lenkrad eine Radhalteachse oder -nabe (2) aufweist;
die mittels eines vertikalen oder fast vertikalen Königszapfens (4) an einer sich an jedem Ende des Achsstützträgers gelegen Gabelstruktur (5) angelenkt ist, wobei der Königszapfen (4) in seiner mittleren Position drehbar mit einem Kupplungssitz (7) verbunden ist, der in der Radhalteachse oder -nabe (2) vorgesehen ist;
wobei erste oszillierende Schubmittel vorgesehen sind die zwischen einem Teil der oberen Oberfläche des Körpers der Radhalteachse oder -nabe (2) wirken, die sich in der Nähe des in der Radhalteachse oder -abe (2) vorgesehen Kupplungssitzes (7) befindet, und einem entsprechenden Abschnitt der unteren Oberfläche des oberen Zweiges oder der oberen Zinke (9) eingefügt ist;
wobei der Königszapfen (4) am unteren Zweige oder Zinke (6) der Gabelstruktur (5) durch eine Kopplung befestigt ist, die die relative freie Drehung, aber nicht die axiale Bewegung, zumindest nach oben ermöglicht; **dadurch gekennzeichnet dass** der Königszapfen (4)
ohne Einschränkungen in axialer Richtung drehbar mit einem koaxialen Gehäusesitz (8) gekoppelt ist wobei der Gehäusesitz in der oberen Zinke (9) der Gabelstruktur (5) hergestellt ist und auch mit einem abgestuften Bereich (10) versehen ist, der nach außen vorsteht und mit einem Teil der oberen Oberfläche des Körpers der Radhalteachse oder -nabe (2) zusammenwirkt, die den Kupplungssitz (7) beherbergt;
wobei auch zweite oszillierende Schubmittel vorgesehen sind, die koaxial zwischen dem unteren Ende des Königszapfens (4) und dem unteren Zweig oder der Zinke (6) arbeiten.

2. Lenkzwischenachse nach Anspruch 1, **dadurch gekennzeichnet, dass** die Kupplung, mit der der Königszapfen (4) am unteren Zweig oder Zinke (6) der Gabelstruktur (2) befestigt ist und der eine relative freie Rotation ermöglicht, aber keine axiale, zumindest aufwärts, Bewegung, eine Druckplatte (11), die am unteren Ende des gleichen Königszapfens befestigt ist (4), enthält.

3. Lenkzwischenachse nach Anspruch 2, **dadurch gekennzeichnet, dass** der zweite oszillierende Gegenschubmitteln, die koaxial zwischen dem unteren Ende des Zapfens oder der Spindel (4) und dem unteren Zweig oder der Zinke (6) arbeiten, aus mindestens einem oszillierenden unteren Lager (12) bestehen, das zur Verfügung gestellt wird, um zwischen dem unteren Zweig oder der Zinke (6) und einer Oberfläche, die die Form einer kreisförmigen nach oben von der Druckplatte (11) gedreht Krone hat, zu arbeiten.

4. Lenkzwischenachse nach Anspruch 2, **dadurch gekennzeichnet, dass** die Druckplatte (1) am unteren Ende des Zapfens oder der Spindel (4) mit Abstand befestigt ist, der durch den nach außen vorstehenden abgestuften Bereich (10) eingestellt werden kann.

5. Lenkzwischenachse nach Anspruch 1 oder 2, **dadurch gekennzeichnet, dass** die erste oszillierende Gegenschubmittel zwischen einem Teil der oberen Oberfläche des Körpers der Radhalteachse oder -nabe (2), die die sich in der Nähe des in der Radhalteachse oder Nabe (2) vorgesehen Kupplungssitzes (7) befindet, und einem entsprechenden Abschnitt der unteren Oberfläche des oberen Zweiges oder der oberen Zinke (9) arbeiten; wobei die ersten oszillierenden Gegenschubmittel aus mindestens einem oberen Lager (13) bestehen, das darauf, zwischen dem oberen Zweig oder der Zinke (9) und einem äußeren Teil der Oberfläche, die die Form einer kreisförmigen nach oben gedreht Krone vom Körper der Radhalteachse oder -nabe (2) hat, zu arbeiten ausgerichtet ist; wobei der nach außen vorstehende abgestufte Bereich (10) mit einem inneren Teil der Oberfläche, die die Form einer kreisförmigen Krone hat und nach oben von der Radhalteachse oder -nabe (2) gedreht ist, zusammen wirkt.

6. Lenkzwischenachse nach Anspruch 2 oder 5, **dadurch gekennzeichnet, dass** der nach außen vorstehende abgestufte Bereich (10) mit einem inneren Teil der Oberfläche, die die Form einer kreisförmigen Krone hat und nach oben von der Radhalteachse oder -nabe (2) gedreht ist, mittels mindestens eines Abstandshalters (14) zusammen wirkt.

## Revendications

1. Essieu intermédiaire de direction pour machines de travail automotrices, comme de gros chariots élévateurs, des machines empileuses pour les conteneurs et autres, ayant une grande largeur totale qui configure un grand contour transversal, du type comprenant, pour chaque roue de direction, un essieu ou moyeu de maintien de roue (2);
qui est pivoté, au moyen d'une pivot fuseau verticale ou presque verticale (4), à une structure de fourche (5) qui est située à chacune des extrémités de la poutre de support d'essieu,
ledit pivot fuseau (4) étant couplé de manière rotative, dans sa position médiane, à un siège d'accouplement (7) prévu dans ledit axe ou moyeu de maintien de roue (2);
des premiers moyens de poussée oscillante étant prévues, qui travaillent entre une partie de la surface supérieure du corps dudit axe ou moyeu de maintien de roue (2), situé à l'extérieur du siège d'accouplement (7) prévu dans ledit axe ou moyeu de maintien de roue (2), et une partie correspondante de la surface inférieure de ladite branche ou branche supérieure (9);
dans laquelle ledite pivot fuseau (4) est fixé à la branche ou pointe inférieure (6) de la structure de fourche (5), au moyen d'un couplage qui permet la libre rotation relative du pivot, mais pas la translation axiale, au moins vers le haut; **caractérisé en ce que** ledit pivot fuseau (4):
est couplé de manière rotative, sans contraintes dans la direction axiale, avec un logement de boîtier coaxial (8) fait dans la branche supérieure (9) de la structure de la fourche (5) et est également pourvu d'une zone étagée (10), qui fait saillie vers l'extérieur et interagit avec une partie de la surface supérieure du corps dedite axe ou moyeu de maintien de roue (2) qui abrite le siège d'accouplement (7);
avec des deuxièmes moyens de poussée oscillante étant également prévus, travaillant coaxialement entre l'extrémité inférieure dudit pivot fuseau (4) et ladite branche ou pointe inférieure (6).

2. Essieu intermédiaire de direction selon la revendication 1, **caractérisé en ce que** ledit couplage, au moyen duquel ledit pivot fuseau (4) est fixée à la branche ou pointe inférieure (6) de la structure de fourche (2) et permet une rotation libre relative, mais pas une translation axiale, au moins vers le haut, comprend une plaque de poussée (11) qui est attachée à l'extrémité inférieure de la même pivot fuseau (4).

3. Essieu intermédiaire de direction selon la revendication 2, **caractérisé en ce que** lesdites deuxièmes moyens de poussée oscillante, qui coopèrent coaxialement entre l'extrémité inférieure dudit pivot ou broche (4) et la branche ou pointe inférieure (6), sont constitués d'au moins un roulement inférieur oscillant (12) qui est prévu pour travailler entre la branche inférieure ou pointe (6) et une surface qui a la forme d'une couronne circulaire tournée vers le haut de la plaque de poussée (11),

4. Essieu intermédiaire de direction selon la revendication 2, **caractérisé en ce que** la plaque de poussée (1) est fixée à l'extrémité inférieure dudit pivot ou de la broche (4) à une distance qui peut être ajustée par la zone étagée (10) faisant saillie vers l'extérieur.

5. Essieu intermédiaire de direction selon la revendication 1 ou 2, **caractérisé en ce que** les premiers moyens de poussée oscillante travaillent entre une partie de la surface supérieure du corps de l'axe ou moyeu de maintien de roue (2), situé à l'extérieur à proximité du siège d'accouplement (7) prévu dans ledit axe ou moyeu de maintien de roue (2), et une partie correspondante de la surface inférieure de la branche ou pointe supérieure (9); avec les premiers moyens de poussée oscillante consistent en au moins un roulement supérieur (13), qui est destiné à travailler entre la branche supérieure ou la pointe (9) et une partie extérieure de la surface qui a la forme d'une couronne circulaire qui est tournée vers le haut du corps dudit axe ou moyeu de maintien de roue (2); la zone étagée faisant saillie vers l'extérieur (10) et agissant avec une partie interne de la surface qui a la forme d'une couronne circulaire et est tournée vers le haut de l'axe ou du moyeu de maintien de la roue (2).

6. Essieu intermédiaire de direction selon la revendication 2 ou 5, **caractérisé en ce que** la zone étagée faisant saillie vers l'extérieur (10) interagit avec une partie interne de la surface qui a la forme d'une couronne circulaire et est tournée vers le haut dudit axe ou moyeu de maintien de roue (2), au moyen d'au moins une entretoise (14).
